# EUROPEAN PATENT SPECIFICATION

(11) **EP 1 683 424 B1**
(45) Date of publication and mention of the grant of the patent: **21.04.2010**
(21) Application number: 06380021.3
(22) Date of filing: 24.01.2006
(51) Int. Cl.: A23B 7/152, A23L 3/3445, A23B 7/157, A23L 3/358, A23L 1/216, B65D 77/20, B65D 77/22, B65D 81/34, B65D 81/20

(54) **Method of preparation and packaging of a fresh food product with respiratory capacity for its conservation and later steam cooking**
Verfahren zur Herstellung und Verpacking von frischen Lebensmitteln mit Atmungsaktivität zur Konservierung und zum späteren Dampfkochen
Procédé de préparation et d'emballage d'aliments frais avec activité respiratoire pour leur conservation et cuisson à la vapeur ultérieure

(30) Priority: 24.01.2005 ES 200500129
(43) Date of publication of application: 26.07.2006
(73) Proprietor: Agroinnova, S.L., 47100 Tordesillas (Valladolid) (ES)
(72) Inventor: Meléndez Laguna, Rafael, 47112 Pedrosa del Rey - Valladolid (ES); Juárez Quintana, María Consuelo, 47002 Valladolid (ES); Meléndez Juárez, Francisco Javier, 49800 Toro - Zamora (ES); Meléndez Juárez, José Manuel, 47004 Valladolid (ES)
(74) Representative: Ungria Lopez, Javier

(56) References cited:
- EP-A- 0 414 451
- WO-A-02/051716
- WO-A-2004/098317
- US-B1- 6 607 764
- HEISS, R; EICHNER K: "Haltbarmachen von Lebensmitteln, p. 128-132" 31 December 1995 (1995-12-31), SPRINGER VERLAG , BERLIN , XP002374398 * pages 131-132 *
- FALBE, J; REGITZ, M (ED.): "RÖMPP CHEMIE LEXIKON, p. 3187-3188" 31 December 1995 (1995-12-31), GEORG THIEME VERLAG , STUTTGART , XP002374399 * the whole document *

## Description

The object of the present invention is a method of preparation and packaging of a fresh food product, in the case in which said food product is grouped within those possessing respiratory activity during the packaging and conservation.

### PRIOR ART OF THE INVENTION

The nearest prior art to this invention consists of Patent application No. WO 2004/090317 in which a method is described based on packaging of a fresh food product in an active modified atmosphere, comprising carrying out the sealing of the container by means of a transparent barrier film, which, together with the container, consists of a material suitable for withstanding high temperatures and pressures, such as those that are going to be reached during the cooking of the food product in a microwave oven. The film, fixed by thermosealing on a perimetric flap of the container, presents some longitudinal vents for the exit of steam during the cooking. The food product is washed in ozonised water before being packaged, permitting its conservation without any chemical agents and making the steam cooking possible thanks to the product's own humidity. Once packaged, said container is subjected to a vacuum and an active modified atmosphere of CO₂ and N₂ or CO₂ and Ar is then introduced. Said patent application does not consider the possibility of this method ending without the addition of the active modified atmosphere, in the case that the food product belongs to those which possess respiratory activity during the packaging and conservation, which simplifies the system, reducing its cost and improving the conservation of said food product.

Additionally pertaining to the background of the present invention, is the document titled "Haltbarmachen von Lebensmitteln" pages 128-132, Heiss, R.; Eichner, K.; 1995; Springer Verlag. This document is a handbook on food conservation that analises a wide range of products. Also, "Römpp chemie lexikon" pages 3187-3188, Falbe, J; Reqits, M.; 1995; Georg Thieme Verlag, Stuttgart; teaches the application of ozonisation in sterilisation processes.

Finally, there are also documents describing different containers designed for the conservation of food products, the most relevant of these being the following patent applicationa: WO 02/051716, EP-A-0414451 and US-B1-6607764.

### DESCRIPTION OF THE INVENTION

The present invention refers to a method of preparation and packaging of a fresh food product with respiratory activity during the packaging and conservation, for its conservation and later steam cooking in a microwave oven, characterised in that it comprises the following operational phases: washing of the food product injecting ozone in the washing water; introduction of the washed food product in a container; thcrmosealing of the container containing the product with a transparent material, preferably a film, provided with one or more vents for the escape of steam; and the application of a vacuum to the container. Said vacuum is preferably a light vacuum applied with the aim of conditioning the container.

In a preferred embodiment of the present invention, the dosing of ozone to the washing water is done in a controlled fashion and in the absence of chemicals.

Furthermore, in one particular embodiment, the food product in question possesses a degree of intrinsic humidity of between 60% and 90%, and preferably between 75% and 85%.

Moreover, in a preferred embodiment, said fresh food product is raw potatoes unpealed or pealed, which may or may not in turn be cut.

### BRIEF DESCRIPTION OF THE FIGURES

**Figure 1**.- Shows a graph representing the evolution of weight loss in potatoes during the conservation. The X axis represents days of conservation and the Y axis the percentage of weight loss.
**Figure 2**.- Shows four graphs representing the evolution of the organoleptic properties: visual quality, dehydration, aroma and firmness, as a function of the days of conservation of the potatoes Visual quality: 9 excellent - 1 unacceptable. Dehydration: 5 nil - 1 severe. Aroma: 5 characteristic - 1 absent. Firmness: 5 characteristic - 1 withering.
**Figure 3****.**- Shows a photograph of some potatoes after 21 days of conservation, where some of them show physiological alterations as a consequence of some treatments.

### MODE OF EMBODIMENT OF THE INVENTION

For the development of the present method, various parameters have been studied in food products with respiration capacity during the packaging, in particular: the organoleptic assessment (visual quality, dehydration, aroma and firmness), microbiological analysis, assessment of the atmosphere inside the container (proportion of CO₂ and O₂), determination of weight loss during conservation, and assessment of physiological changes as a consequence of conservation treatments. So, in accordance with those parameters, for the case of food products possessing respiration capacity during the packaging and conservation, as might be potatoes, the method forming the object of this invention presents higher values starting from three weeks of conservation.

The present method is also shown by means of the following examples, which are by way of illustration and are in no way limiting.

### EXAMPLE 1

This example refers to the manufacturing process, which basically consists of the following steps:
1.- Storing the potatoes on pallets with an approximate capacity of 1000 kg, in chambers with controlled temperature and humidity, and with the addition of ozone therein.
2.- Tipping the pallets into a hopper which acts as a lung for later on passing to the washing phase.
3.- The washing time will mainly depend on the characteristics of the earth adhered to the potatoes. Ozone is added to the washing water.
4.- Manual selection and temporary storage in aerated intermediate hoppers for the partial drying of the potatoes. Ozone is added to the drying air of the hoppers.
5.- The potatoes pass to the production line following manual selection.
6.- A further inspection is conducted prior to weighing, and after that the weighed and selected potatoes are deposited on polypropylene trays with a capacity of 500 grams which are introduced into the thermosealer for perimetrically sealing them with the film.
7.- Finally, a vacuum is applied in order to condition the container, and the latter is covered with duly labelled cardboard strips.

### EXAMPLE 2

Potatoes were treated following the method described in example 1 and were conserved for several days under different conditions of temperature and atmosphere.

As a consequence of the high respiratory activity of the packaged potatoes, the percentage of CO₂ inside the containers underwent a pronounced increase following the packaging and during the conservation, reaching levels of 70% (Table 1). The percentage of CO₂ recorded in the containers with actively modified atmosphere (air + 10% CO₂ and air + 20% CO₂) was very high starting from 6 days of conservation (greater than 25%). A slight increase was seen in the quantity of CO₂ accumulated in containers conserved at 8°C with respect to containers at 4°C.

From the analysis of this data, it is revealed that it is not advisable to carry out gas injection in potato containers, since the actual respiration of the potatoes together with the low permeability of the plastic film are sufficient for providing a CO₂ enriched atmosphere. In those containers in which the atmosphere is actively modified with the initial injection of 10% or 20% CO₂, excessive levels are reached of approximately 70%. At the end of 21 days of conservation, the percentage of O₂ in the containers was less than 1 under all conditions and at both temperatures, and was a risk factor for creating an almost anaerobic atmosphere with the risk of growth of anaerobic pathogens.

**Table 1. Evolution of the gaseous composition inside the containers during conservation at 4°C and 8°C.**

| Treatment | Temperature | 0 days % CO₂ | 6 days % CO₂ | 13 days % CO₂ | 21 days % CO₂ | 21 days % O₂ |
|---|---|---|---|---|---|---|
| 10% CO₂ | 4°C | 10.2 ± | 27.5 ± | 44.0 ± | 62.7 ± | <1 |
| | 8°C | 0.1 | 1.2 | 3.6 | 1.9 | <1 |
| 20% CO₂ | 4°C | 10.1 ± | 38.5 ± | 47.3 ± | 64.4 ± | <1 |
| | 8°C | 0.2 | 1.6 | 6.0 | 12.8 | <1 |
| MAP | 4°C | 20.5 ± | 32.4 ± | 48.3 ± | 63.9 ± | <1 |
| | 8°C | 0.3 | 1.0 | 0.4 | 0.4 | <1 |
| | | 20.4 ± | 36.1 ± | 50.1 ± | 69.7 ± | |
| | | 0.5 | 0.5 | 1.0 | 3.5 | |
| | | 0.0 ± | 12.5 ± | 19.7 ± | 29.0 ± | |
| | | 0.0 | 0.1 | 0.5 | 7.0 | |
| | | 0.0 ± | 12.8 ± | 25.7 ± | 34.5 ± | |
| | | 0.0 | 0.4 | 5.8 | 4.4 | |

The values are the mean of 3 repetitions consisting of approximately 500 g of potatoes/replica ± the standard deviation. MAP = Passively modified atmosphere

### EXAMPLE 3

Potatoes were treated following the method described in example 1 and the weight loss undergone by them following a period of 21 days of conservation was analysed.

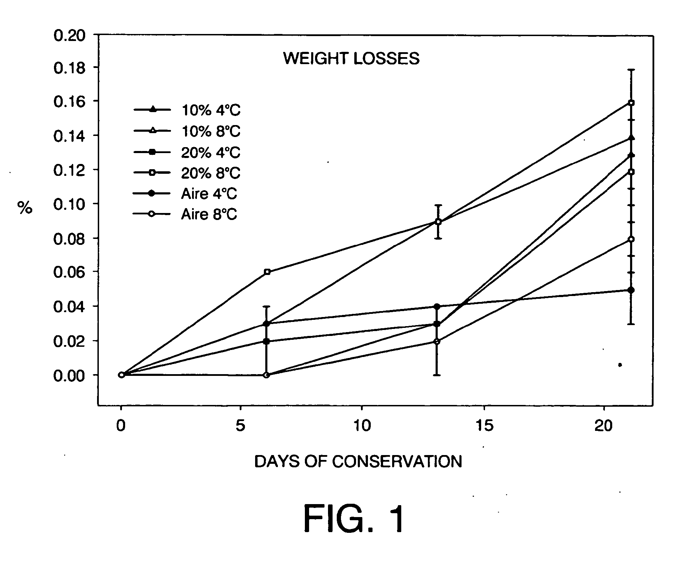

The weight losses are related to dehydration of the potatoes and were practically nil in all cases, varying between 0.05% (MAP 4°C) and 0.16% (20% CO₂ 8°C) after 21 days of conservation (Figure 1). No significant differences were observed between the dehydration of potatoes conserved at 4°C and those conserved at 8°C. The lack of dehydration was reflected in the adequate firmness of the potatoes after the 21 days conservation period.

### EXAMPLE 4

Potatoes were treated following the method described in example 1 and the variations undergone in their organoleptic quality during their conservation was analysed, in particular the visual quality, dehydration, aroma and firmness were studied.

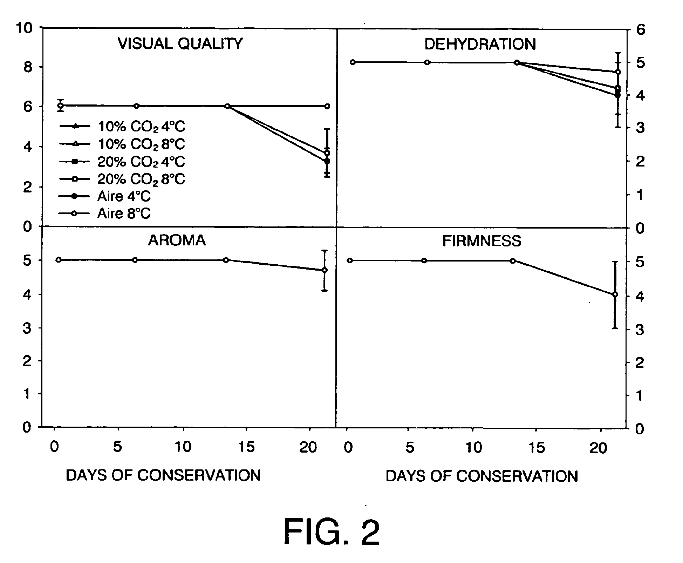

The initial visual quality of the potatoes on this occasion was not so good as it had been in earlier experiments. In spite of this, the samples conserved under a passive modified atmosphere maintained their visual quality after 21 days of conservation. Nevertheless, all the samples conserved under 20% or 10% of CO₂ were marked with a low score (Figure 2).

A slight dehydration of the skin of the potatoes was seen after 21 days of conservation, which was not significant when compared with the initial values (Figure 2).

All the potatoes maintained their characteristic aroma after 21 days of conservation with respect to the initial values (Figure 2).

The firmness of the potatoes fell in an insignificant way towards the end of the 21 days of conservation in all the treatments studied (Figure 2).

In addition, the organoleptic assessment was made following cooking of the potatoes in a microwave oven (6 minutes 1000W), from which it was deduced that the visual quality, aroma, taste and firmness of the potatoes after cooking were good, and no strange alteration was detected in the taste or aroma, not even in samples with high levels of CO₂.

### EXAMPLE 5

In the present example, potatoes were treated following the method described in example 1 and the losses due to physiological alterations shown by the potatoes following a period of conservation were analysed.

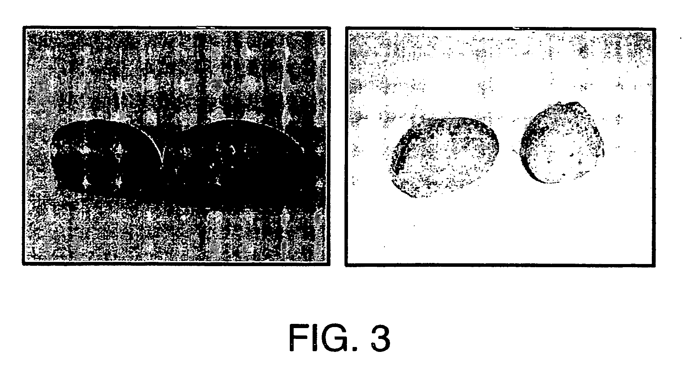

After 21 days of conservation, a physiological alteration was detected in some treatments. As shown in figure 3, this physiopathy was characterised by the appearance of a reddish exudation in the lenticels of the potato. It was found that this alteration appeared in all treatments involving actively modified atmospheres in which the concentration of CO₂ was very high and the potatoes were being conserved at 4°C. Nevertheless, it was not observed in potatoes which were packaged in a passively modified atmosphere. Therefore, this disorder could be caused by the high concentrations of CO₂ at low temperature. Table 2 quantifies the percentage of potatoes presenting this disorder.

**Table 2. Losses due to alterations following 21 days of conservation.**

| Treatment | % losses |
|---|---|
| 10% CO₂ 9 4°C | 37 ± 28 |
| 10% CO₂ 8°C | 3 ± 6 |
| 20% CO₂ 4°C | 30 ± 21 |
| 20% CO₂ 8°C | 11 ± 16 |
| MAP 4°C | 0 ± 0 |
| MAP 8°C | 0 ± 0 |

### EXAMPLE 6

In the following example, potatoes were treated following the method described in example 1 and a microbiological analysis was conducted following different conservation times under different conditions of temperature and atmosphere, as well as after their steam cooking in a microwave oven.

The initial hygienic-sanitary quality of the potatoes on the day of the packaging was very good given that the microbiological limits for these products (day of manufacture ≤ 10⁵ ufc/g) were not exceeded. During conservation of the packaged potatoes with injection of 10% and 20% of CO₂ as well as in a passively modified atmosphere, the microbe counts increased though without exceeding the authorised limit of 10⁶ - 10⁷ ufc after three weeks of conservation (Table 3). No significant differences were observed between the mesophyll counts in the samples packaged with and without injection of gases, in spite of having reached very high levels of CO₂. The total mesophyll counts were very similar at both temperatures with no apparent differences being observed in the microbiological quality between the two temperatures studied during three weeks of conservation.

**Table 3. Microbial counts of mesophylls (ufc/g)**

| | **Packaged** | **0 days** | **7 days** | **14 days** | **21 days** |
|---|---|---|---|---|---|
| | 10% CO₂ | (2.1 ± | (5.9 ± 0.2) | (1.2 | (9.0 ± |
| | | 0.8) x | x | ± 0.6) x | 5.2) x |
| | | 10⁴ | 10⁵ | 10⁶ | 10⁵ |
| 4°C | 10% CO₂ | 7.5 ± 2.9 | | | (5.9 ± |
| | cooked | | | | 1.1) x |
| | | | | | 10⁵ |
| | 20% CO₂ | (2.1 ± | (1.3 ± | (2.0 ± | (5.1 ± |
| | | 0.8) x | 0.1) x | 0.8) x | 4.8) x |
| | | 10⁴ | 10⁶ | 10⁵ | 10⁵ |
| | 20% CO₂ | 7.5 ± 2.9 | | | (1.2 ± |
| | cooked | | | | 0.7) x |
| | | | | | 10 |
| | MAP | (2.1 ± | (1.1 ± | (1.2 ± | (5.2 ± |
| | | 0.8) x | 0.5) x | 0.7) x | 2.7) x |
| | | 10⁴ | 10⁶ | 10⁶ | 10⁶ |
| | MAP | 7.5 ± 2.9 | | | 7.5 ± 2.9 |
| | cooked | | | | |
| | **Packaged** | **0 days** | **7 days** | **14 days** | **21 days** |
| | 10% CO₂ | (2.1 ± | (1.1 ± 0.8) | (4.8 ± | (8.6 ± |
| | | 0.8) x | x | 0.3) x | 9.0) x |
| | | 10⁴ | 10⁶ | 10⁶ | 10⁶ |
| | 10% CO₂ | 7.5 ± 2.9 | | | 3.7 ± 1.4 |
| 8°C | cooked | | | | |
| | 20% CO₂ | (2.1 ± | (1.7 ± | (1.3 ± | (5.1 ± |
| | | 0.8) x | 0.5) x | 0.6) x | 1.1) x |
| | | 10⁴ | 10⁶ | 10⁶ | 10⁶ |
| | 20% CO₂ | 7.5 ± 2.9 | | | (5.2 ± |
| | cooked | | | | 3.7) x |
| | | | | | 10 |
| | MAP | (2.1 ± | (3.3 ± | (6.7 ± | (9.7 ± |
| | | 0.8) x | 1.4) x | 3.7) x | 2.0) x |
| | | 10⁴ | 10⁶ | 10⁶ | 10⁶ |
| | MAP | 7.5 ± 2.9 | | | (3.1 ± |
| | cooked | | | | 3.5) x |
| | | | | | 10 |

Cooking in a microwave at 1000W for 6 minutes, as specified in the recommendations on the packaging, was sufficient for reducing the microbial contamination of mesophyll aerobes and total coliforms to 4 logarithms (tables 3 and 4). Therefore, cooking in a microwave guarantees the safety of the product for eating and permits consumption will skin as specified in the commercial packaging.

**Table 4. Microbial counts of total coliforms (ufc/g)**

| | **Packaged** | **0 days** | **7 days** | **14 days** | **21 days** |
|---|---|---|---|---|---|
| | 10% CO₂ | (2.5 ± | (1.6 ± | (3.0 ± | (1.0 ± |
| | | 0.1) | 0.3) x | 3.0) x | 0.1) x |
| | | | 10³ | 10⁴ | 10⁴ |
| | 10% CO₂ | < 5 | | | (2.7 ± |
| | cooked | | | | 0.1) x |
| | | | | | 10 |
| | 20% CO₂ | 2.5 ± 0.1 | (2.5 ± | (9..2 ± | (5.2 ± |
| | | | 0.3) x | 3.5) x | 4.2) x |
| 4°C | | | 10³ | 10³ | 10⁴ |
| | 20% CO₂ | < 5 | | | < 5 |
| | cooked | | | | |
| | MAP | 2.5 ± 0.1 | (1.2 ± | (3.6 ± | (2.8 ± |
| | | | 0.3) x | 0.4) x | 6.1) x |
| | | | 10⁴ | 10⁴ | 10⁴ |
| | MAP | < 5 | | | < 5 |
| | cooked | | | | |
| | **Packaged** | **0 days** | **7 days** | **14 days** | **21 days** |
| | 10% CO₂ | 2.5 ± 0.1 | (9.0 ± | (8.2 ± | (7.4 ± |
| | | | 6.6) x | 1.1) x | 3.1) x |
| | | | 10³ | 10³ | 10³ |
| | 10% CO₂ | < 5 | | | < 5 |
| | cooked | | | | |
| | 20% CO₂ | 2.5 ± 0.1 | (2.7 ± | (5.2 ± | (4.1 ± |
| | | | 0.8) x | 2.4) x | 0.8) x |
| | | | 10⁴ | 10⁴ | 10⁴ |
| | 20% CO₂ | < 5 | | | < 5 |
| | cooked | | | | |
| | MAP | 2.5 ± 0.1 | (4.4 ± | (1.9 ± | (1.6 ± |
| | | | 3.9) x | 0.5) x | 0.5) x |
| | | | 10⁴ | 10⁵ | 10⁴ |
| | MAP | < 5 | | | < 5 |
| | cooked | | | | |

In these examples, it can be deduced that in the case of food products which maintain a high respiratory activity during the packaging and conservation, as might be potatoes, the improved conditions of packaging include the passively modified atmosphere, in other words, after applying the vacuum to the container with the product and as a consequence of the product's own respiratory activity.

## Claims

1. Method of preparation and packaging of a fresh food product with respiratory activity during the packaging and conservation, for its conservation and later steam cooking in a microwave oven, **characterised in that** it comprises the following operational phases:
- storing of the food product in chambers with ozone;
- washing of the food product with injection of ozone in the water used for washing;
- introduction of the washed food product in a container;
- thermosealing of the container containing the product with a transparent material provided with one or more vents for the escape of steam;
- application of a vacuum to the container for its conditioning.

2. Method of preparation and packaging of a fresh food product according to claim 1, **characterised in that** the injection of ozone in the storage, washing and drying is done in a controlled fashion and in the absence of chemicals.

3. Method of preparation and packaging of a fresh food product according to either of claims 1 or 2, **characterised in that** said fresh food product possesses a degree of intrinsic humidity of between 60% and 90%,

4. Method of preparation and packaging of a fresh food product according to any of claims 1 to 3, **characterised in that** said fresh food product possesses a degree of intrinsic humidity of between 75% and 85%.

5. Method of preparation and packaging of a fresh food product according to any of claims 1 to 4, **characterised in that** the fresh food product is raw potatoes.

6. Method of preparation and packaging of a fresh food product according to claim 5, **characterised in that** said potatoes are presented in one of the following forms:
unpeeled, peeled, peeled and cut, or unpeeled and cut.

## Patentansprüche

1. Verfahren zur Herstellung und Verpackung eines Frischkostprodukts mit Atmungsaktivität während der Verpackung und Konservierung, um es zu konservieren und später in einem Mikrowellenofen unter Dampf zu kochen, **dadurch gekennzeichnet, dass** es die folgenden Betriebsphasen umfasst:
- Lagern des Lebensmittelprodukts in Kammern mit Ozon;
- Waschen des Lebensmittelprodukts mittels Ozoninjektion in das zum Waschen benutzte Wasser;
- Einführen des gewaschenen Lebensmittelprodukts in einen Behälter;
- Wärmesiegeln des Behälters, der das Produkt enthält, mit einem transparente Material, das mit einem oder mehreren Luftlöchern versehen ist, um den Dampf abzulassen;
- Anlegen eines Vakuums in dem Behälter, um diesen zu konditionieren.

2. Verfahren zur Herstellung und Verpackung eines Frischkostprodukts nach Anspruch 1, **dadurch gekennzeichnet, dass** die Ozoninjektion beim Lagern, Waschen und Trocknen in gesteuerter Weise und ohne Chemikalien ausgeführt wird.

3. Verfahren zur Herstellung und Verpackung eines Frischkostprodukts nach einem der Ansprüche 1 oder 2, **dadurch gekennzeichnet, dass** das Frischkostprodukt einen intrinsischen Feuchtigkeitsgrad von zwischen 60 % und 90 % aufweist.

4. Verfahren zur Herstellung und Verpackung eines Frischkostprodukts nach einem der Ansprüche 1 bis 3, **dadurch gekennzeichnet, dass** das Frischkostprodukt einen intrinsischen Feuchtigkeitsgrad von zwischen 75 % und 85 % aufweist.

5. Verfahren zur Herstellung und Verpackung eines Frischkostprodukts nach einem der Ansprüche 1 bis 4, **dadurch gekennzeichnet, dass** das Frischkostprodukt rohe Kartoffeln ist.

6. Verfahren zur Herstellung und Verpackung eines Frischkostprodukts nach Anspruch 5, **dadurch gekennzeichnet, dass** die Kartoffeln in einer der folgenden Formen vorliegen:
ungeschält, geschält, geschält und geschnitten oder ungeschält und geschnitten.

## Revendications

1. Procédé de préparation et d'emballage d'un produit alimentaire frais avec activité respiratoire durant l'emballage et la conservation, pour sa conservation et sa cuisson ultérieure à la vapeur dans un four à micro-ondes, **caractérisé en ce qu'**il comprend les opérations suivantes:
- stockage du produit alimentaire dans des chambres contenant de l'ozone;
- lavage du produit alimentaire avec injection d'ozone dans l'eau utilisée pour le lavage;
- introduction du produit alimentaire lave dans un conteneur;
- scellement thermique du conteneur contenant le produit avec un matériau transparent pourvu d'un ou plusieurs évents pour l'échappement de la vapeur;
- application d'une dépression au conteneur pour son conditionnement.

2. Procédé de préparation et d'emballage d'un produis alimentaire frais suivant la revendication 1, **caractérisé en ce que** l'injection d'ozone dans le stockage, le lavage et le séchage est effectuée de manière contrôlée et en l'absence de produits chimiques.

3. Procédé de préparation et d'emballage d'un produit alimentaire frais suivant la revendication 1 ou 2,
**caractérisé en ce que** ledit produit alimentaire frais possède un degré d'humidité intrinsèque compris entre 60% et 90%.

4. Procédé de préparation et d'emballage d'un produit alimentaire frais suivant l'une quelconque des revendications 1 à 3, **caractérisé en ce que** ledit produit alimentaire frais possède un degré d'humidité intrinsèque compris entre 75% et 85%.

5. Procédé de préparation et d'emballage d'un produit alimentaire frais suivant l'une quelconque des revendications 1 à 4, **caractérisé en ce que** le produit alimentaire frais est constitué de pommes de terre crues.

6. Procédé de préparation et d'emballage d'un produit alimentaire frais suivant la revendication 5, **caractérisé en ce que** lesdites pommes de terre sont présentées sous l'une des formes suivantes:
non pelées, pelées, pelées et coupées ou non pelées et coupées.
